Europäisches Patentamt

European Patent Office

Office européen des brevets

(11) Publication number: **0 089 133**
**A1**

# (12) EUROPEAN PATENT APPLICATION

(21) Application number: **83301043.2**

(22) Date of filing: **28.02.83**

(51) Int. Cl.³: **B 60 P 3/34**

(30) Priority: **12.03.82 GB 8207264**

(43) Date of publication of application:
**21.09.83 Bulletin 83/38**

(84) Designated Contracting States:
**AT BE CH DE FR GB IT LI LU NL SE**

(71) Applicant: **Retford, Vincent Lawrence**
**3 Primrose Hill**
**Cuddington Near Northwich(GB)**

(72) Inventor: **Retford, Vincent Lawrence**
**3 Primrose Hill**
**Cuddington Near Northwich(GB)**

(74) Representative: **Dodd, David Michael et al,**
**ROYSTONS 531 Tower Building Water Street**
**Liverpool L3 1BA(GB)**

(54) Improvements in and/or relating to mobile accomodation units.

(57) A mobile accommodation unit, such as a caravan (1) has at least one extension part (2) movable between a retracted non-operative position substantially within or overlying the caravan and an extended operative position relative to the caravan. The extension part (2) has rigid walls, which are preferably made of sheets of a suitable synthetic polymeric material or metal sheeting having an interlayer of a suitable synthetic polymeric resin e.g. a polyurethane, to provide overall heat insulation and security. The extension part has a collapsible floor (5) comprising a plurality of strips, each connected to an adjacent strip along an intermediate line of articulation. The floor (5) is substantially planar in the extended operative position and folded-up or disarticulated in the retracted non-operative position within or overlying the caravan.

*FIG.1*

- 1 -

Title:    Improvements in and/or relating to mobile
                         accommodation units

<u>DESCRIPTION</u>

This invention relates to mobile accommodation units, and has particular but not exclusive reference to caravans, collapsible or folding-type caravans, trailer tents, motorised caravans, mobile office accommodation, demonstration and work units.

There are at present many varieties of mobile accommodation unit on the market. Holidays in hotels have become increasingly expensive, and it has therefore become more popular to use mobile accommodation units on holidays.

However, the costs of non-extendable i.e. "one-piece" caravans have continued to rise, often discouraging potential purchasers. Furthermore, the costs of hiring one piece caravans have also continued to rise, resulting in a potential drop in the numbers of people wishing to hire caravans.

Another factor to be borne in mind is that one-piece caravans are large and thus can be affected by side winds. Furthermore, they are potentially cumbersome to trail, particularly along narrow country lanes as found in major holiday areas. Trailing of one piece caravans

can also cause considerable inconvenience to other road users. Also, one piece caravans are often inconvenient, and an eyesore, to those owners who store or park them at home and not permanently on some sites as for the very large one-piece caravans. The permanent siting of one-piece caravans would also appear to destory the advantage of mobility.

There has been an increase in the use of extendable mobile accommodation units i.e. units having extension parts. Examples of such mobile homes include collapsible- or folding- type caravans, or trailer tents of the modern so-called "American Style". These types of mobile accommodation units are often cheaper than the equivalent size one-piece caravans and they offer owners the opportunity of an increase in accommodation and/or storage space. There has also been an increase in the use of small one-piece caravans having some extension parts. Typical extension parts include height-adjustable roofs which can be raised to provide further sleeping accommodation or extra luggage space as well as extra headroom within the caravan.

A disadvantage of known extendable mobile accommodation units has been the use of non-rigid walls or roofs of the extension parts. The walls of the extension parts have been made of, for example, canvas or a suitable synthetic polymeric material. A wall or roof made of synthetic polymeric material is usually formed as a concertina and is capable of opening out to the desired or permitted distance of extension.

Particular problems which can occur with canvas are stretching, shrinking, rotting or drying out of the canvas material, as well as the fact that canvas is a fairly fragile material which can be torn or damaged. Furthermore canvas is not a heat-insulating material. A wall made of synthetic polymeric material can be made to provide a degree of heat-insulation, but such a material can still be torn or damaged.

Extension parts, which have walls or roofs made from canvas or a suitable synthetic polymeric material, can also be broken into quite easily, thus presenting an owner with a potential security problem.

A further disadvantage of extendable mobile accommodation units is that the "floors or bases" of the extension parts are rigid and cannot be collapsed or folded up. This means that the floor space of the caravan, or trailer tent when collapsed, can be considerably diminished when the extension parts are in the retracted position within the caravan or trailer tent. It is necessary sometimes to use a caravan or trailer tent when in transit, for example in the storage of holiday luggage, as well as for the storage of wardrobes, beds, cupboards., cooking equipment etc. which form part of the caravan or trailer tent or in use of toilet or cooking facilities during temporary stops whilst touring. The retracted rigid floors limits such storage in transit.

The present invention sets out to provide an extendable mobile accommodation unit having at least one extension part which in its retracted position enables less space to be taken up in home parking/storage and easier trailing of the mobile accommodation unit than known mobile accommodation units. Furthermore, the provision of at least one extension part in its retracted position enables the facilities of the mobile accommodation unit to be used during temporary stops on a long journey or when touring without the need to extend fully the at least one extension part of the mobile accommodation unit, for example in the use of a toilet or in the preparation of a snack using kitchen facilities or in taking a rest using sleeping facilities. The present invention further sets out to provide an extension part heat insulated and secure.

According to the present invention, there is provided a mobile accommodation unit which comprises at least one part movable between a retracted non-operative position substantially within or overlying said unit and an extended operative position relative to said unit, the at least one part having rigid boundary walls and a collapsible, say rollable or articulable, floor, whereby the floor is substantially planar in the extended operative position and folded-up or disarticulated in the retracted non-operative position within or overlying said unit.

The at least one part may be movable for example by sliding, between the retracted non-operative position within or overlying said unit and an extended operative position, preferably along slideways. The at least one part may slide within said unit or on the exterior of said unit to the extended operative position.

The at least one part is preferably arranged to extend in either direction parallel to or perpendicular to the longitudinal side walls of the unit.

It is preferred that the collapsible or articulable floor comprises a plurality of strip members or segments, each member or segment being connected to an adjacent member or segment along an intermediate line of articulation. Each member or segment may be integrally connected, or separably attached, to the adjacent member along the intermediate line of articulation. Thus, on the one hand when the at least one part is in the retracted non-operative position within or overlying the unit, the floor may be collapsed and folded up or rolled-up if each member or segment of the floor is integrally connected to an adjacent member or segment along the intermediate line of articulation. On the other hand, the floor may be disarticulated with each member or segment being separated from an adjacent member or segment along the intermediate line of articulation.

The rigid boundary walls of the at least one part are preferably to provide heat insulation and a degree of security to the mobile home. The walls preferably comprise a suitable synthetic polymeric resin, such as a polyurethane or a polystyrene, located between external "skins" or walls of a suitable material such as sheets of a similar synthetic polymeric material or metal sheeting, which can withstand external conditions such as rain and the effect of sun, and/or mistreatment during use.

The mobile accommodation unit may be a caravan, a collapsible- or folding-type caravan, a trailer tent a motorised caravan, mobile office accommodation, demonstration and work units.

Embodiments of the invention will now be described by way of example with reference to the accompanying drawings, in which:

Figure 1 is a schematic side elevation of a first embodiment of a mobile accommodation unit according to the invention;

Figure 2 is a schematic simplified longitudinal section through a partly extended unit;

Figure 3 is a schematic side elevation of the fully extended unit of Figure 1;

Figure 4 is an end view of the unit taken in the direction A in Figure 1;

Figure 5 is a schematic simplified cross-section taken along B-B in Figure 1;

Figure 6 is a schematic side elevation of a second embodiment of a unit according to the invention;

Figure 7 is a schematic side elevation of a third embodiment of a unit according to the invention;

Figure 8 is a partial perspective view of an articulable floor, shown partly folded up;

Figure 9 is an end view of the floor of Figure 8 with the floor planner;

Figure 10 is a schematic plan view of an extension part showing a sealing arrangement around the extension part;

Figure 11 is a schematic side elevation of part of an articulable floor showing a waterproofing arrangement;

Figures 12A and 12B shows schematically a side and end elevation respectively of a known type of caravan, incorporating a feature of the invention;

Figures 13A and 13B show schematically a side and end elevation respectively of a known type of caravan, incorporating a further feature of the invention;

Figures 14A, 14B and 14C show schematically a side and two end elevations respectively of a known type of collapsible caravan, incorporating a feature of the invention;

Figures 15A and 15B show schematically an end elevation of a known type of folding caravan in a raised and lowered state respectively, incorporating a feature of the invention;

Figure 16 is a schematic side elevation of a fourth embodiment of a unit according to the invention;

Figure 17 is a schematic simplified longitudinal section through a partly extended unit;

Figure 18 is a schematic side elevation of the fully extended unit of Figure 16;

Figure 19 is an end view of the unit taken in the direction A in Figure 16; and

Figure 20 is a schematic simplified cross-section taken along B-B in Figure 16.

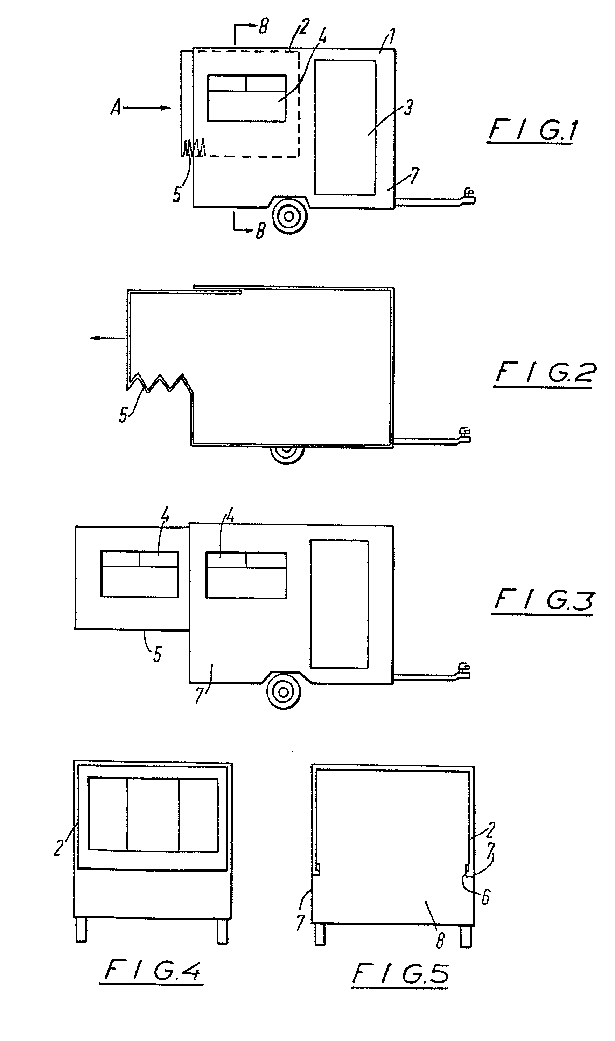

Figure 1 shows a schematic side elevation of a small caravan 1 having an extension part 2 shown in its retracted position within the caravan. The extension part 2 has rigid walls, which are preferably made of sheets of a suitable synthetic polymeric material or metal sheeting having an interlayer of a suitable synthetic polymeric resin, such as a polyurethane or a polystyrene, to provide overall heat insulation and security. The caravan 1 is provided with a door 3 and window 4. The floor 5 of the extension part 2 is shown completely folded up in the manner of a compressed concertina.

Figure 2 shows a longitudinal section of the caravan of Figure 1 partly extended. It can be seen from Figure 2 that the floor 5 comprises a plurality of strips, each strip being connected to an adjacent strip along an intermediate line of articulation. The floor may comprise a plurality of such strips integrally connected about the intermediate line of articulation between each strip. It is possible for the floor to comprise a plurality of such strips separably attached to each other about the intermediate line of articulation between adjacent strips.

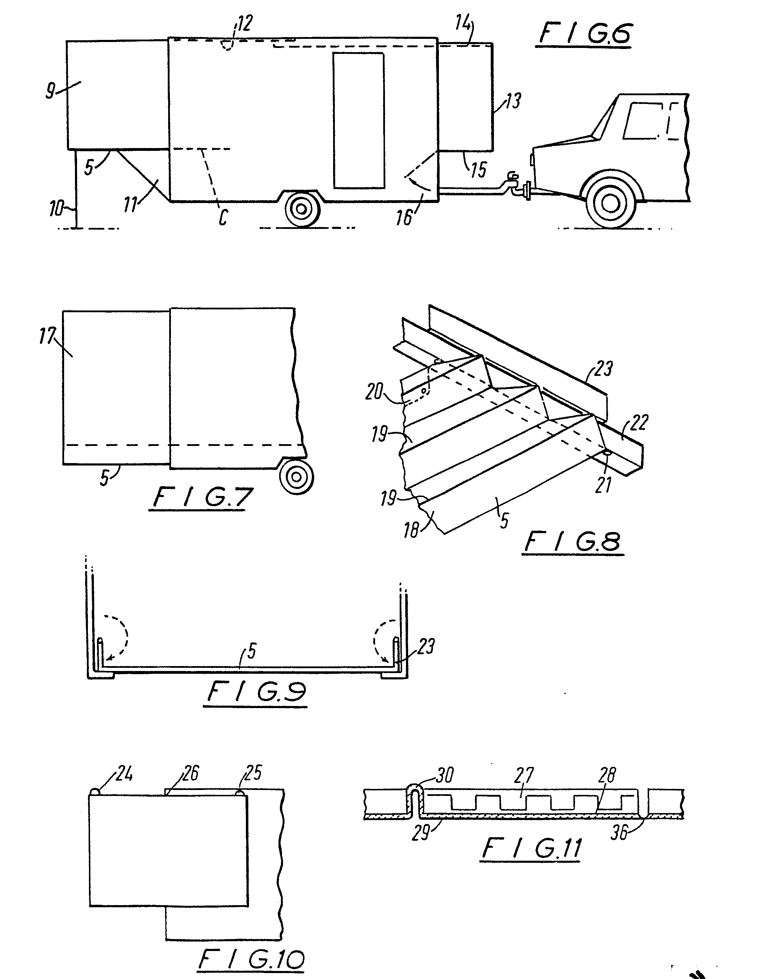

The plurality of strips pivot about the lines of articulation, so that the floor can be flattened and made substantially planar when the extension part 2 is in its fully extended operative position (as shown in Figure 3). When the extension part is fully retracted, the plurality of strips are either folded up to have a concertina form or rolled-up (not shown) if the strips are integrally connected together, or disarticulated and stacked adjacently to each other if the strips are separably attached to each other. A further description of the floor occurs later with reference to Figure 8.

Figure 3 shows that the extension part 2 has duplicated windows 4 to ensure that the windows 4 of the extension part coincide with the windows in the main part of the caravan when the extension part is fully retracted. Thus, there is no loss of light to the main part of the caravan when the extension part is fully retracted.

Figure 4 shows that the arrangement of an extension does not hinder a driver's vision through the caravan.

The extension part 2 has support arms which engage and run on slideways 6 arranged along the insides 7 of the caravan (as shown in Figure 5).    The extension part
shown in Figures 1 to 5 is for a bedroom extension,
and therefore the slideways 6 are arranged approximately
mid-way between the top and bottom edges of the sides 7
of the caravan.    It can thus be seen that the slideways
do not interfere with the interior 8 within the caravan.

Figure 6 shows a bedroom extension part 9 having
additional supports 10 or 11, which can be used when
the extension part is in use as a bedroom extension.
The supports 10, 11 are pivotally attached to the
extension part 9 and are lowered to engage the ground or a
side of the caravan respectively (as shown in Figure 6).
Normally, the support arms and slideways can take the
weight of the extension parts, but occasionally it is
necessary to use additional supports.

The extension part 9 runs on overhead slideways 12,
which are approximately the same length as the caravan.
Overhead slideways are used when the door of the caravan
is located in the middle of one of the sidewalls, and they
permit longer support arms to be used.

As well as having an extension part at the rear of
the caravan i.e. as shown by reference numeral 9 in
Figure 6, it is possible to have an extension part 13 at
the front of the caravan.  The extension part 13
has smaller support arms than the extension part 9, and they engage and run on slideways 14 between the slideways 12 of the extension part 9.

The extension part 9 has a floor 15, which is not collapsible or articulable. As the extension part 13 is small, its floor 15 is used as seating, when the extension part is in its retracted position. However, the floor 15 does have an extension member 16 pivotally attached thereto so as to provide a larger area when the floor 15 is used as a base for a mattress etc.

Figure 7 shows a "full depth" extension part 17 having an articulable floor 5 as already described. The extension part has support arms which engage and run on slideways adjacent the chassis of the caravan. Thus, the weight of the extension part is carried directly by the chassis of the caravan.

Figure 8 shows a partial perspective view of an articulable floor 5 partly folded up. The floor 5 comprises a plurality of strips 18, each which is connected to an adajcent strip about an intermediate line of articulation 19. The floor, when formed of the integrally connected strips, is anchored at 20 and also at 21 at the end of the support arms 22. A sealing and locking strip 23 abuts the support arms 22 (as shown in Figures 8 and 9).

It is of course necessary to provide sealing, and this can be seen in plan view in Figure 10. Rubber strip seals 24 and 25 are arranged on three sides of the extension part to engage with, for example, the rear end of the caravan 26. The seal 24 is used when the extension part is fully retracted, and the seal 25 is used when the extension part is fully extended. As an alternative sealing arrangement to that shown in Figure 10, short canvas strips with zips could be used.

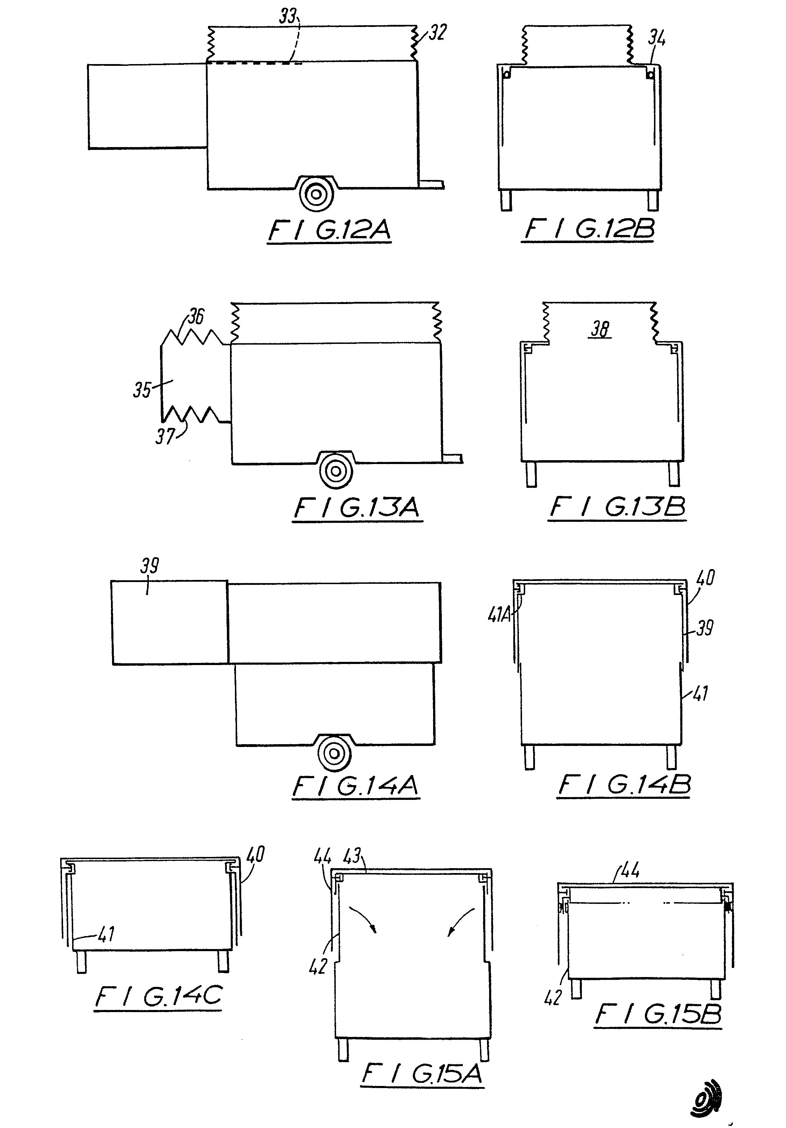

The lines of articulation between adjacent strips can be formed as mating connections, with one longitudinal edge of one strip having an elongate element e.g. a pin or the like and one longitudinal edge of an adjacent strip having a socket or channel or the like adapted to receive the pin of the one strip. An alternative articulable floor shown in Figure 11 is formed by fixing the strips 27 at spaced intervals onto one side 28 of, for example, weatherproof fabric or a heavy duty canvas 29. The "free" fabric at 30, 31 can then act as hinges for compact folding up of the floor. With this particular type of floor made of weatherproof fabric or heavy duty canvas, it may be necessary to provide additional ecngate or axially extendable (i.e. telescope securing and support means, so that the floor can be held substantially planar when the extension part is fully extended.

The application of a rigid extension part having an articulable floor will now be described briefly in relation to known mobile accommodation units, in particular a type of caravan presently on the market, a collapsible- type caravan popular in the United States, and a folding- type caravan popular on the Continent.

Figures 12A and 12B show that it is possible to have an extension part in a conventional caravan having an extendable roof portion 32. The support arms and slideways 33 fit neatly under the fixed roof portion 34 and do not get in the way or interfere with the extendable roof portion 32. The support arms and slideways 33 are also positioned over the door so that they allow access to the caravan facilities, although at a restricted height when standing. Figure 13A and 13B show an extension part 35 having an articulable roof 36, as well as an articulable floor 37. The articulable roof 36 permits more headroom 38 for short temporary stops during touring.

Figures 14A, 14B and 14C show a rigid extension part when applied to a known type of collapsible caravan.  The extension part 39 is supported in the upper part 40 of the caravan 41.  The slideways 41A are neatly arranged to avoid interference with the erection of the caravan.

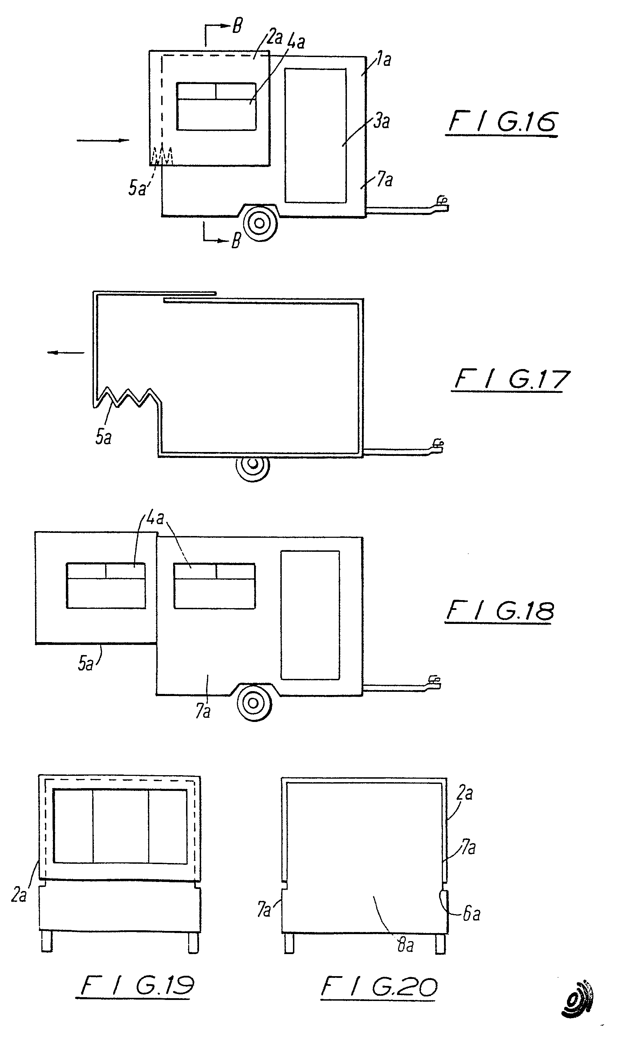

Figures 15A and 15B show a known type of folding caravans, where the side walls 42 are foldable so that the caravan can be packed down to a height of, for example, 122 cms (4 feet).  However, in this caravan, the extension part 43 slides on a slideways mounted on the exterior of the roof 44 so as to allow the side walls 42 to fold down.

Figures 16 to 20 show a fourth embodiment in which the extension part 2a is arranged to run on the outside of the caravan 1a between its retracted position, and thus overlying the exterior of the caravan, and fully extended position (the features shown in Figures 16 to 20 are accorded the same reference numerals as used in Figures 1 to 5 with the addition of the subscript 'a' to each number).  Figures 16 to 20 will thus not be additionally described, as reference can be made to Figures 1 to 5.

Advantages of the invention are that the at least one extension part allows the mobile accommodation unit to be enlargened for use on a holiday site or as semi-permanent office accommodation or as a demonstration or work unit, as well as to be collapsed down to a compact unit for towing purposes and home parking/storage. Cooking, dining, seating, toilet and sleeping facilities can be retained whilst the at least one extended part is in its retracted position. The at least one extension part is capable of being fully heat insulated because of its rigid walls. The at least one extension part is secure and is **not** torn or damaged easily. The rigid walls of the at least one extension part are a greater deterrent to burgalry and vandalism than conventional canvas-sided extension parts.

Furthermore, in the case of collapsible mobile accommodation units, such as collapsible caravan and trailer tents, the collapsible or articulable floor eases "storage in transit" problems and can extend the use of collapsible caravans or trailer tents during towing. Facilities can still be used even with the at least one extension part in its fully retracted position. The use of the collapsible or articulable floor is also particularly beneficial to modern so-called "American Style" trailer tents.

CLAIMS

1.    A mobile accommdation unit comprising at least one part movable between a retracted non-operative position substantially within or overlying said unit and an extended operative position relative to said unit, the at least one part having rigid boundary walls and a collapsible floor, whereby the floor is substantially planar in the extended operative position and folded-up or disarticulated in the retracted non-operative position within or overlying said unit.

2.    A unit as claimed in claim 1, wherein the at least one part is slidable  between the two positions.

3.    A unit as claimed in claim 2, wherein the at least one part slides along slideways arranged within or on the exterior of said unit.

4.    A unit as claimed in any one of the preceding claims, wherein the at least one part is extendable in either direction parallel to or perpendicular to longitudinal side walls of said unit.

5.    A unit, as claimed in claim 1, wherein the collapsible floor comprises a plurality of strip members or segments, each of which is connected to an adjacent member or segment along an intermediate line of articulation.

6. A unit as claimed in claim 5, wherein each member or segment in integral with the adjacent member or segment along the intermediate line of articulation.

7. A unit as claimed in claim 6, wherein each member or segment is fixed to and spaced at relative intervals along one side of a weatherproofed and/or heavy duty fabric, the free fabric which extends between adjacent strip members or segments serving as said intermediate line of articulation.

8. A unit as claimed in claim 7, wherein additional elongate or axially extendable securing and support means is provided to hold the floor substantially planar when the extension part is fully extended.

9. A unit as claimed in claim 5, wherein each member or segment is separably attached to the adjacent member or segment along the intermediate line of articulation, said intermediate line of articulation being formed as a mating connection between one longitudinal edge portion of one member or segment having an elongate element, and one longitudinal edge portion of an adjacent member or segment having a socket or channel for removably receiving said elongate element.

10. A unit as claimed in claim 1, wherein the rigid boundary walls of the at least one part comprise sheets of a synthetic polymeric material or metal sheeting in flanking relationship to an interlayer of a synthetic polymeric resin, so as to provide overall heat insulation and strength.

*F I G.1*

*F I G.2*

*F I G.3*

*F I G.4*

*F I G.5*

FIG.6

FIG.7

FIG.8

FIG.9

FIG.10

FIG.11

F I G.12A

F I G.12B

F I G.13A

F I G.13B

F I G.14A

F I G.14B

F I G.14C

F I G.15A

F I G.15B

_F I G.16_

_F I G.17_

_F I G.18_

_F I G.19_　　　_F I G.20_

**0089133**

Application number

European Patent
Office

**EUROPEAN SEARCH REPORT**

EP 83 30 1043

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-U-7 236 925 (RAU) <br> * Entire document * | 1-4 | B 60 P 3/34 |
| X | DE-U-7 033 588 (BRONNER) <br> * Figures 1, 2 * | 1-3,5 | |
| A | FR-A-1 293 652 (CAITUCOLI) <br> * Figures 1, 2 * | 1,5 | |
| A | DE-A-2 605 966 (BOYMANNS) <br> * Claims 1, 3; figures 3-5 * | 1,5 | |

TECHNICAL FIELDS
SEARCHED (Int. Cl. ³)

B 60 P 3/00

The present search report has been drawn up for all claims

| Place of search <br> BERLIN | Date of completion of the search <br> 10-06-1983 | Examiner <br> LUDWIG H J |
|---|---|---|